# EUROPÄISCHE PATENTANMELDUNG

(11) **EP 4 279 330 A1**
(43) Veröffentlichungstag der Anmeldung: **22.11.2023**
(21) Anmeldenummer: 23174360.0
(22) Anmeldetag: 19.05.2023
(51) Int. Cl.: B60L 58/18, B60L 58/21

(54) **BATTERIESYSTEM UMFASSEND EIN BATTERIEMANAGEMENTSYSTEM SOWIE EIN KRAFTFAHRZEUG**

(30) Priorität: 19.05.2022 DE 102022112664
(71) Anmelder: Webasto SE, 82131 Stockdorf (DE)
(72) Erfinder: Nowroth, Julian, 82131 Stockdorf (DE); Ziegler, Christian, 82131 Stockdorf (DE); Seidel, Christian, 82131 Stockdorf (DE); Bushe, Maximilian, 82131 Stockdorf (DE); Hartmeyer, Marc, 82131 Stockdorf (DE)
(74) Vertreter: Nordmeyer, Philipp Werner

(57) **Zusammenfassung**

Die vorliegende Erfindung betrifft ein Batteriesystem (1), bevorzugt für ein Kraftfahrzeug (2), umfassend ein Batteriemanagementsystem (3) und mindestens zwei Batteriepacks (5, 6), die jeweils Batteriezellen (7), mindestens einen Schalter (9) zum Schalten des jeweiligen Batteriepacks (5, 6) und eine Messeinrichtung (8) zum Messen von Betriebsparametern der Batteriezellen (7) aufweisen, wobei das Batteriemanagementsystem (3) in genau einem der Batteriepacks (5) angeordnet ist und die Schalter (9) der übrigen Batteriepacks (6) von dem Batteriemanagementsystem (3) angesteuert werden.

## Beschreibung

### Technisches Gebiet

Die vorliegende Erfindung betrifft ein Batteriesystem umfassend ein Batteriemanagementsystem und ein Kraftfahrzeug.

### Stand der Technik

Häufig wird zur Steuerung eines verteilten Batteriesystems, in dem mehrere Batteriepacks zu einer gemeinsamen, logischen Batterie zusammengeschaltet werden, ein Master-Slave-System verwendet, wobei der Master in einem Batteriepack und die Slaves in weiteren Batteriepacks angeordnet sind und jeweils die einzelnen Batteriepacks steuern.

Nachteilig ist dabei, dass die Batteriepacks mit den Slaves jeweils ein eigenes Steuergerät benötigen, wofür eine spezielle Software entwickelt und gewartet werden muss. Während des Entwicklungsprozesses der Software ist neben der Softwareintegration in das Master-Slave-System insbesondere ein Flashen neuer Software für die Slave-Steuergeräte in den Batteriepacks erforderlich. Dafür ist vor Allem während des Entwicklungsprozesses oder einer Wartung ein direkter Zugang zu den Slave-Steuergeräten in den Batteriepacks erforderlich, um diese beispielsweise mit einem Nadeladapter flashen zu können. Dies kann bei in einem Kraftfahrzeug räumlich verteilten Batteriepacks schwierig sein, wo insbesondere bei verteilten Batteriesystemen Batteriepacks schwer zugänglich sind.

Weiterhin sind bei der Entwicklung eines verteilten Master-Slave-Systems für das Batteriemanagement die Anzahl der Hardware-Bauteile und damit die Hardware-Entwicklungskosten sowie die Stückkosten für die einzelnen Batteriepacks, insbesondere für die Slave-Batteriepacks, erhöht. Die Entwicklung und der Betrieb von mehreren verteilten Steuergeräten in einem Master-Slave-System für das Batteriemanagement gestalten sich ebenfalls aufgrund der Funktionskoordination und der Kommunikation zwischen den Steuergeräten sehr komplex.

So ist aus der EP 3 497 776 A1 ist eine Batterieeinheit umfassend mehrere austauschbare Batteriepacks bekannt, bei welchem Schaltelemente zum Einstellen eines Lade- und Entladestroms in den einzelnen Batteriepacks von einem von einem Master-Slave-System gesteuert werden. Die einzelnen Batteriepacks sind dabei im Wesentlichen baugleich, wobei ein Batteriepack ein Master-Steuergerät aufweist und die anderen, austauschbaren Batteriepacks jeweils ein Slave-Steuergerät. Dabei weisen entsprechend alle Batteriepacks jeweils ein eigenes Steuergerät auf.

Aus der EP 3 687 027 A1 ist ein Batteriesystem umfassend zwei Batteriepacks bekannt, welche mittels eines Master-Slave-Systems gesteuert werden. Die Slave-Steuergeräte in den Batteriepacks messen Spannung, Strom und einen Ladezustand und senden die Messwerte an das Master-Steuergerät. Die Master-Steuereinheit steuert entsprechend einer Auswertung der Messwerte und die Schaltelemente in den Batteriepacks an. Alle Batteriepacks weisen ein eigenes Steuergerät auf.

Aus der US 2019/0229376 A1 ist ein Batteriemanagementsystem für eine aus mehreren in Reihe geschalteten Batteriepacks bestehende Batterie bekannt, welches in einem Master-Submaster-Slave-System zum Senden von Befehlen und Informationen für die einzelnen Batteriezellen organisiert ist. Der Master sendet Signale über einen elektrischen Datenbus an die Submaster, wobei jeder Submaster für ein Batteriepack zuständig ist. Der Submaster wandelt die elektrischen Signale in optische Signale um und sendet diese als optische Signale innerhalb des Batteriepacks an die einzelnen Slaves zum Ausführen von Befehlen oder zum Senden von Informationen an den Submaster. Dabei ist jeder Batteriezelle in dem Batteriepack ein Slave zugeordnet. Auch hier weisen alle Batteriepacks ein eigenes Steuergerät auf.

Aus der WO 2021/162740 A1 ist ein Batteriemanagementsystem zum Symmetrieren einer Batterie bestehend aus mehreren Batteriepacks bekannt, welches in einem Master-Slave-System organisiert ist. Dabei weist eines der im wesentlichen baugleichen Batteriepacks den Master auf und die anderen die Slaves, welche mit dem Master über einen Datenbus verbunden und austauschbar ausgebildet sind, wobei alle Batteriepacks ein eigenes Steuergerät aufweisen.

### Darstellung der Erfindung

Ausgehend von dem bekannten Stand der Technik ist es eine Aufgabe der vorliegenden Erfindung, ein Batteriesystem mit einem vereinfachtem Batteriemanagementsystem bereitzustellen, welches einfacher gewartet werden kann.

Die Aufgabe wird durch ein Batteriesystem mit den Merkmalen des Anspruchs 1 gelöst. Vorteilhafte Weiterbildungen ergeben sich aus den Unteransprüchen, der Beschreibung und den Figuren.

Entsprechend wird ein Batteriesystem, bevorzugt für ein Kraftfahrzeug, vorgeschlagen, umfassend ein Batteriemanagementsystem und mindestens zwei Batteriepacks, die jeweils Batteriezellen, mindestens einen Schalter zum Schalten des jeweiligen Batteriepacks und eine Messeinrichtung zum Messen von Betriebsparametern der Batteriezellen aufweisen. Das Batteriesystem ist dadurch gekennzeichnet, dass das Batteriemanagementsystem in genau einem der Batteriepacks angeordnet ist und die Schalter der übrigen Batteriepacks von dem Batteriemanagementsystem angesteuert werden.

Mit anderen Worten sind die Schalter in allen Batteriepacks dazu eingerichtet, direkt von dem einen Batteriemanagementsystem, das in dem einen Batteriepack angeordnet ist, angesteuert zu werden. Damit kann entsprechend auf das Vorsehen von Steuergeräten in allen anderen Batteriepacks verzichtet werden, wodurch die Wartung des Batteriesystems deutlich vereinfacht wird.

Im Folgenden wird zur besseren Unterscheidung der Batteriepacks auch von einem Hauptmodul gesprochen, wenn es dasjenige ist, in dem das Batteriemanagementsystem vorgesehen ist. Die übrigen Batteriepacks, in denen kein Batteriemanagementsystem vorhanden ist, werden auch als Satellitenmodule bezeichnet.

Die Batteriepacks können jeweils eine Messeinrichtung zum Messen eines Betriebsparameters der jeweiligen Batteriezellen in den Batteriepacks und/oder ein Schaltelement zum Ändern eines Schaltzustands des Batteriepacks bezüglich der Schaltanordnung aufweisen, welche jeweils direkt mit dem Batteriemanagementsystem elektrisch und/oder kommunikativ mittels einer Signalleitung verbunden sind. Der Betriebsparameter kann beispielsweise eine Spannung, ein Strom, eine Temperatur oder ein Ladezustand sein.

Das Batteriemanagementsystem kann als ein elektronisches Steuergerät, insbesondere als eine Electronic Control Unit (ECU), ausgebildet und in genau einem der Batteriepacks angeordnet sein. Das Batteriemanagementsystem kann mittels der Signalleitung zum Senden und/oder zum Empfangen von einem Signal mit der Messeinrichtung und/oder dem Schalter direkt verbunden und dazu eingerichtet sein, dass die Schalter der übrigen Batteriepacks von dem Batteriemanagementsystem direkt angesteuert werden und/oder die Betriebsparameter direkt gemessen werden.

Das Batteriemanagementsystem kann hierzu als eine elektronische Steuereinheit (ECU) vorgesehen sein, welche zumindest einen Prozessor und/oder zumindest einen Speicher umfasst, wobei in dem Speicher Programmanweisungen gespeichert sind, die den zumindest einen Prozessor dazu veranlassen, ein Verfahren zum Ansteuern der Schalter und/oder einer Messeinrichtung zum Messen eines Betriebsparameters der jeweiligen Batteriezelle in den Batteriepacks auszuführen. Mit anderen Worten, das Batteriemanagementsystem kann eine Datenverarbeitungsvorrichtung oder zumindest eine Prozessoreinrichtung aufweisen, die dazu eingerichtet ist, ein Verfahren zum Ansteuern der Schalter und/oder der Messeinrichtung, insbesondere zum Symmetrieren der Batteriepacks, durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen.

Der Schalter kann beispielsweise ein Transistor, insbesondere ein Feldeffekttransistor (MOSFET) oder ein Bipolartransistor (IGBT), oder ein Relais sein. Des Weiteren kann die Prozessoreinrichtung Programmcode aufweisen, der dazu eingerichtet ist, bei Ausführen durch die Prozessoreinrichtung die Ausführungsform des besagten Verfahrens durchzuführen. Der Programmcode kann in einem Datenspeicher oder Prozessoreinrichtung gespeichert sein.

Hierdurch ergibt sich der Vorteil, dass Batteriepacks, welche an räumlich schwer zugänglichen Stellen in einem Kraftfahrzeug angeordnet sind, keine eigenen Steuergeräte benötigen. Dies kann die Herstell- und Wartungskosten reduzieren. Weiterhin kann die Entwicklung und Wartung einer eigenen Software für die Steuergeräte in den nicht mit dem Batteriemanagementsystem ausgestatteten Batteriepacks (Satellitenmoduls), welche bevorzugt als Slave-Steuergeräte ausgestaltet sind, durch die direkte Verbindung der Aktorik und/oder der Sensorik mit einem einzigen Master-Steuergerät wie dem besagten Batteriemanagementsystem vermieden werden. Darüber hinaus reduziert das oben beschriebene Konzept der direkten Anbindung der Aktorik und/oder einer Sensorik der Batteriepacks die Komplexität der Software eines einzelnen Steuergeräts für das Batteriemanagement, insbesondere bezüglich der Master-Slave-Interaktion, Diagnose und Wartung sowie Einschlaf- und Aufwachvorgänge der einzelnen Steuergeräte.

Eine Ausführungsform sieht vor, dass die Signalleitung zum Senden und/oder zum Empfangen von einem Signal mit dem Batteriemanagementsystem in einem Hauptmodul und zumindest einem elektronischen Schaltsteuergerät in zumindest einem Satellitenmodul verbunden ist, wobei das Batteriemanagementsystem dazu eingerichtet ist, die Schalter in dem jeweiligen Satellitenmodul mittels dem Signal über das jeweilige Schaltsteuergerät anzusteuern. Mit anderen Worten, das Schaltsteuergerät in dem jeweiligen Satellitenmodul kann dazu eingerichtet sein, ein Signal für ein Öffnen und/oder ein Schließen der Schalter vom Batteriemanagementsystem in dem Hauptmodul zu empfangen und die Schalter des Satellitenmoduls direkt anzusteuern. Dabei kann das Hauptmodul das Batteriemanagementsystem umfassen und das jeweilige Satellitenmodul das Schaltsteuergerät.

Eine Ausführungsform sieht vor, dass das Batteriemanagementsystem und insbesondere eine darin integrierte Recheneinheit dazu eingerichtet ist, mittels der Messeinrichtungen den oder die Betriebsparameter der Batteriezelle direkt zu messen. Mit anderen Worten, in dem Hauptmodul und/oder in den jeweiligen Satellitenmodulen kann eine Messeinrichtung vorgesehen sein, welche dazu eingerichtet ist, einen Betriebsparameter der jeweiligen Batteriezelle zu messen. Der Betriebsparameter kann eine Spannung und/oder ein Strom und/oder ein Ladezustand und/oder eine Temperatur sein. Die Messeinrichtung kann dazu mit dem Batteriemanagementsystem mittels einer Signalleitung verbunden sein. Das Batteriemanagementsystem kann dabei dazu eingerichtet sein, den Betriebsparameter mittels der Messeinrichtung direkt, insbesondere ohne einen Umweg über ein Slave-Steuergerät, zu messen.

Beispielsweise kann die Messeinrichtung als ein Halbleiterbauelement, beispielsweise als ein Printed Circuit Board (PCB) und insbesondere als eine Spannungsmesskarte (Voltage Measurement Board), ausgeführt sein, welches dazu eingerichtet ist, in einem Batteriepack eine Spannung der daran angeschlossenen Batteriezellen zu messen. Dieses kann zum Messen des Betriebsparameters direkt mit dem Batteriemanagementsystem mittels einer Signalleitung verbunden und dazu eingerichtet sein, direkt von dem Batteriemanagementsystem angesteuert zu werden. Hierdurch ergibt sich der Vorteil, dass die Messeinrichtung keine eigene Software benötigt und das Batteriemanagementsystem den Betriebsparameter der jeweiligen Batteriezelle in räumlich verteilten Batteriepacks direkt messen kann.

Eine Ausführungsform sieht vor, dass das Batteriemanagementsystem mit der Messeinrichtung und/oder dem Schalter mittels einer Signalleitung zum Senden und/oder zum Empfangen von einem Signal direkt verbunden ist. Mit anderen Worten, der Schalter und/oder die Messeinrichtung können mit dem Batteriemanagementsystem mittels einer Signalleitung, beispielsweise zum Übertragen eines elektrischen oder optischen Signals, verbunden sein, wobei das Batteriemanagementsystem dazu eingerichtet ist, die Messeinrichtung direkt über die Signalleitung zu steuern. Die Signalleitung kann dabei dazu eingerichtet sein, ein Informationssignal, beispielsweise umfassend einen Messwert des Betriebsparameters, und/oder ein Signal zum Öffnen oder Schließen eines Schalters, zu übertragen. Beispielsweise kann die Signalleitung für das Ansteuern der Schalter oder zum Ansteuern der Messeinrichtung, insbesondere der Spanungsmesskarte, als eine elektrische Leitung ausgebildet sein. Hierdurch ergibt sich der Vorteil, dass die Schalter und/oder die Messeinrichtung keine eigene Software benötigen.

Eine Ausführungsform sieht vor, dass die Signalleitung zum Senden und/oder zum Empfangen von einem Signal mit dem Batteriemanagementsystem in dem Hauptmodul und zumindest einem elektronischen Messsteuergerät in dem zumindest einem Satellitenmodul verbunden ist, wobei das Messsteuergerät dazu eingerichtet ist, eine Spannungsmessung in dem Satellitenmodul, insbesondere an den Batteriezellen des Satellitenmoduls, durchzuführen. Mit anderen Worten, das Batteriemanagementsystem im Hauptmodul kann dazu eingerichtet sein, ein Signal umfassend zumindest einen Messwert mittels der Signalleitung von dem jeweiligen Messsteuergerät in dem jeweiligen Satellitenmodul zu empfangen. Die Spannungsmessung kann eine Hochvolt-(HV)-Spannungsmessung sein. Beispielsweise kann das Messsteuergerät dazu eingerichtet sein, eine Spannung einer Zusammenschaltung der Batteriezellen des jeweiligen Satellitenmoduls, wie beispielsweise einer Reihen- oder einer Parallelschaltung, zu messen und/oder eine Gesamtspannung des Satellitenmoduls mittels eines Aufaddierens der Einzelspannungen der Batteriezellen bei einer Serienschaltung zu bilden. Ergänzend kann das jeweilige Satellitenmodul das Schaltsteuergerät und das Messsteuergerät aufweisen, wobei diese in einer elektronischen Steuereinheit (ECU) integriert sein können. Das Batteriemanagementsystem kann dabei dazu eingerichtet sein, ein elektrisches Signal mittels der Signalleitung an die elektronische Steuereinheit zu senden und/oder von der elektronischen Steuereinheit zu empfangen. Die Signalleitung kann beispielsweise eine elektrische oder eine optische Signalleitung sein, wobei das Signal jeweils ein elektrisches oder ein optisches Signal sein kann.

Eine Ausführungsform sieht vor, dass die jeweiligen Batteriepacks räumlich getrennt, bevorzugt räumlich verteilt, sind. Mit anderen Worten, die Batteriepacks können mittels der Schaltanordnung elektrisch miteinander verbunden, insbesondere in Reihe oder parallel geschaltet sein. Die Batteriepacks können jeweils mittels einer Ansteuerung der Schalter durch das Batteriemanagementsystem mit der Schaltanordnung elektrisch verbunden oder getrennt werden. Die Batteriepacks können beispielsweise in einer Karosserie in einem Kraftfahrzeug räumlich verteilt und gleichzeitig mittels der Schaltanordnung elektrisch miteinander verbunden sein. Hierdurch ergibt sich der Vorteil, dass das Batteriesystem als eine Batterie fungieren kann, welche einzelne, räumlich geteilten Batteriepacks umfasst.

Beispielsweise kann so ein knapper Bauraum in einem Kraftfahrzeug zur Unterbringung möglichst vieler Batteriezellen besser genutzt werden. Dies kann darüber hinaus bei einer Elektrifizierung von konventionellen, auf Verbrennungsmotoren basierten Plattformen von Kraftfahrzeugen eine erhebliche Vereinfachung der Integration des Batteriesystems in das Kraftfahrzeug bewirken. Ferner kann durch eine gleichmäßige und/oder variable Gewichtsverteilung des Batteriesystems im Kraftfahrzeug eine Fahrdynamik des Kraftfahrzeugs positiv beeinflusst werden. Insbesondere ist eine Integration eines verteilten Batteriesystems in das Kraftfahrzeug bei Kraftfahrzeugen mit besonderen Fahrdynamikanforderungen und/oder mit Anforderungen an eine besondere Gewichtsverteilung des Kraftfahrzeugs, wie beispielsweise bei Sportwagen, besonders vorteilhaft.

Eine Ausführungsform sieht vor, dass das Batteriemanagementsystem dazu eingerichtet ist, mittels einer Recheneinheit einen Betriebszustand der Batteriezellen, bevorzugt den Betriebszustand des Batteriesystems, auszuwerten. Mit anderen Worten, das Batteriemanagementsystem kann dazu eingerichtet sein, einen Verlauf des mittels der Messeinrichtung gemessenen Betriebsparameters in einem Speicher zu speichern, wobei die Recheneinheit dazu eingerichtet ist, den Betriebsparameter mit einem gespeicherten Sollwert zu vergleichen. Ergänzend kann die Recheneinheit dazu eingerichtet sein, den Verlauf des Messwerts mittels eines Regelalgorithmus zu interpretieren und eine Gegenmaßnahme einzuleiten, wie beispielsweise einen Vorladewiderstand ein- oder auszuschalten oder den gemessenen Betriebsparameter auf einen Sollwert mittels einer Ansteuerung der Schalter zu regeln. Hierdurch ergibt sich der Vorteil, dass das Batteriemanagementsystem den Betriebszustand eines verteilten Batteriesystems ohne zusätzliche Slave-Steuergeräte in den Satellitenmodulen überwachen und insbesondere regeln kann.

Eine Ausführungsform sieht vor, dass das Batteriemanagementsystem dazu eingerichtet ist, mittels dem jeweiligen Schalter einen Schaltzustand des jeweiligen Batteriepacks bezüglich einer Schaltanordnung zu ändern, insbesondere das jeweilige Batteriepack mit der Schaltanordnung elektrisch zu verbinden oder von der Schaltanordnung zu trennen. Mit anderen Worten, das Batteriemanagementsystem kann dazu eingerichtet sein, das jeweilige Batteriepack, insbesondere das Satellitenmodul, ein- und auszuschalten. Ein- und Ausschalten kann dabei bedeuten, dass das Batteriepack von dem Batteriesystem getrennt oder in das Batteriesystem eingebunden werden kann. Hierdurch ergibt sich der Vorteil, dass ein fehlerhaftes Batteriepack von dem Batteriesystem getrennt werden kann, was eine Betriebssicherheit des Batteriepacks verbessert. Ergänzend oder alternativ kann die Schaltanordnung durch ein Ansteuern der Schalter von einer Reihenschaltung in eine Parallelschaltung umgewandelt werden.

Eine Ausführungsform sieht vor, dass das Batteriemanagementsystem dazu eingerichtet ist, mittels einer Ansteuerung des Schalters das Batteriesystem über die Schaltanordnung zu symmetrieren. Mit anderen Worten, dass Batteriemanagementsystem kann dazu eingerichtet sein, die jeweiligen Batteriepacks, insbesondere der Batteriezellen in den Batteriepacks, auf einen gemeinsamen Sollwert eines Betriebsparameters, wie beispielsweise eine Spannung und/oder einen Ladezustand, zu regeln. Beispielsweise kann das Batteriemanagementsystem die Regelung mittels der Recheneinheit durchführen. Hierdurch ergibt sich der Vorteil, dass das verteilte Batteriesystem durch das Batteriemanagementsystem wie eine einzige Batterie überwacht und geregelt wird.

Eine Ausführungsform sieht vor, dass das Batteriemanagementsystem einen gemeinsamen elektrischen Anschluss, bevorzugt eine Klemme oder einen Stecker, zum Anschließen des Batteriesystems an die Ladevorrichtung und/oder den elektrischen Verbraucher aufweist. Mit anderen Worten, das Batteriesystem kann eine gemeinsame Schnittstelle bezüglich einer externen Ladevorrichtung oder eines externen elektrischen Verbrauchers aufweisen. Der elektrische Verbraucher kann beispielsweise ein Elektromotor eines Kraftfahrzeugs und/oder eine andere Systemkomponente des Kraftfahrzeugs, wie beispielsweise ein Steuergerät, sein. Das Hauptmodul kann den Anschluss als eine gemeinsame Schnittstelle der Haupt- und Satellitenmodule umfassen. Dabei kann der Anschluss für einen Gleichstrom oder einen Wechselstrom oder einen Drehstrom ausgebildet sein. Hierdurch ergibt sich der Vorteil, dass das Batteriesystem wie eine einzige, zusammenhänge Batterie betrieben werden kann.

Eine Ausführungsform sieht vor, dass das Batteriemanagementsystem dazu eingerichtet ist, mittels dem Schalter dem Batteriesystem, insbesondere dem jeweiligen Batteriepack, eine Voraufladeschaltung zum Laden vorzuschalten. Mit anderen Worten, das Batteriemanagementsystem kann beispielsweise dazu eingerichtet sein, von einem Batteriehauptsteuergerät ein Signal über den Beginn eines Ladevorgangs über die Signalleitung zu bekommen oder ergänzend mittels der Messeinrichtung über den Anschluss einen Ladestrom zu detektieren. Wenn beispielsweise ein von der Messeinrichtung gemessener Spannungs- und/oder Stromwert am Anschluss einen Schwellenwert überschreitet, kann das Batteriemanagementsystem einen Ladevorgang erkennen. Für das Bereitstellen einer Strombegrenzung zum Laden des Batteriesystems kann das Batteriemanagementsystem dazu eingerichtet sein, eine gemeinsame Voraufladeschaltung dem Batteriesystem vorzuschalten. Ergänzend kann jeweils eine Voraufladeschaltung für die jeweiligen Batteriepacks separat vorgesehen sein, welche einzeln von dem Batteriemanagementsystem angesteuert werden können. Beispielsweise kann das einzelne Aufschalten einer Voraufladeschaltung für die einzelnen Batteriepacks zum Symmetrieren bei einer großen Abweichung eines Betriebsparameters zur Erhöhung der Lebensdauer vorteilhaft sein.

Die Erfindung sieht zudem ein Kraftfahrzeug umfassend das besagte Batteriesystem, insbesondere ein räumlich verteiltes Batteriesystem vor. Mit anderen Worten, das Batteriesystem kann mehrere Batteriepacks umfassen, die im Kraftfahrzeug räumlich verteilt sind, aber über einen gemeinsamen Anschluss an eine Ladevorrichtung und/oder einen elektrischen Verbraucher angeschlossen werden können. Das Kraftfahrzeug ist bevorzugt als Kraftwagen, insbesondere als Personenkraftwagen oder Lastkraftwagen, oder als Personenbus oder Motorrad ausgestaltet. Das Kraftfahrzeug kann elektrisch angetrieben (EV) oder insbesondere ein Hybridelektrofahrzeug (HEV, PHEV) sein, wobei die dafür vorgesehenen Komponenten im Kraftfahrzeug jeweils ein elektrischer Verbraucher des Batteriesystems sein können.

Die Erfindung umfasst auch Realisierungen, die eine Kombination der Merkmale mehrerer der beschriebenen Ausführungsformen umfassen.

### Kurze Beschreibung der Figuren

Bevorzugte weitere Ausführungsformen der Erfindung werden durch die nachfolgende Beschreibung der Figuren näher erläutert. Dabei zeigen:
Figur 1 eine schematische Darstellung eines in einem Kraftfahrzeug räumlich verteilten Batteriesystems;
Figur 2 eine schematische Darstellung des räumlich verteilten Batteriesystems; und
Figur 3 ein schematisches Schaltbild einer Schaltanordnung der Batteriepacks des Batteriesystems.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

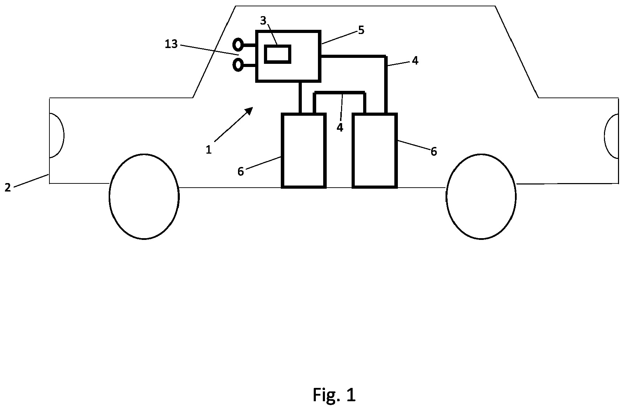

In Figur 1 ist sehr schematisch ein Kraftfahrzeug 2 dargestellt, welches ein Batteriesystem 1 umfasst. Das Batteriesystem 1 kann beispielsweise zur Versorgung von Antriebskomponenten oder von anderen Komponenten im Kraftfahrzeug 2 vorgesehen sein. Das Batteriesystem 1 umfasst beispielhaft drei Batteriepacks (mit den Bezugszeichen 5 und 6), welche jeweils Batteriezellen 7 umfassen (in Figur 1 nicht dargestellt), wobei das Batteriesystem 1 zumindest ein Hauptmodul 5 und beliebig viele Satellitenmodule 6 umfassen kann.

In den Batteriepacks 5, 6 können die Batteriezellen 7 auch in Batteriemodulen organisiert sein, wobei ein Batteriepack 5, 6 dann jeweils mehrere Batteriemodule umfassen kann.

Die Batteriepacks sind im Wesentlichen baugleich, aber logisch sind sie in ein Hauptmodul 5 und eine Anzahl von Satellitenmodulen 6 gruppiert. Dabei sind das Hauptmodul 5 und die Satellitenmodule 6 in einer Schaltanordnung 4 elektrisch miteinander verbunden. In Figur 1 ist die Schaltanordnung 4 vom Hauptmodul 5 und den Satellitenmodulen 6 eine Reihenschaltung. Alternativ kann die Schaltanordnung 4 auch eine Parallelschaltung oder eine Kombination aus einer Reihenschaltung und einer Parallelschaltung sein.

Das Hauptmodul 5 und die Satellitenmodule 6 des Batteriesystems 1 sind im Kraftfahrzeug 2 räumlich verteilt angeordnet. So kann ein Bauraum im Kraftfahrzeug 2 zur Unterbringung eines Batteriesystems mit einer erhöhten Kapazität optimal genutzt werden. Das Batteriesystem 1 kann über den Anschluss 13 mit einer Ladevorrichtung 11 und/oder einem elektrischen Verbraucher 12 (jeweils nicht dargestellt) elektrisch verbunden werden, sodass das Batteriesystem 1 für den Verbraucher oder für das Ladegerät als eine einzige logische Batterie sichtbar ist.

Mit anderen Worten stellt sich das Batteriesystem 1 für einen Verbraucher 12 oder eine Ladevorrichtung 11 als eine einzige Batterie mit nur einem Anschluss 13 dar, so dass sich für den jeweiligen Verbraucher 12 oder die Ladevorrichtung 11 im Prinzip nichts ändert, wenn die Anzahl der Batteriepacks verändert und insbesondere Satellitenmodule 6 hinzugefügt oder fortgenommen werden - einzig die Kapazität der sichtbaren Batterie ändert sich dadurch.

Im Unterschied zum Satellitenmodul 6 weist das Hauptmodul 5 als einziges der Batteriepacks ein Batteriemanagementsystem 3 auf. Dieses kann beispielsweise als ein elektronisches Steuergerät ausgebildet und im Hauptmodul 5 angeordnet sein. Die Satellitenmodule 6 weisen nur eine eigene Aktorik und/oder Sensorik auf und haben kein eigenes Steuergerät. Die Satellitenmodule 6 umfassen somit neben den Batteriezellen 7 beispielsweise einen Schalter 9 und/oder eine Messeinrichtung 8.

Das Hauptmodul 5 kann zudem den Anschluss 13 zum Anschließen der logischen Batterie an einen elektrischen Verbraucher 12 und/oder an eine elektrische Ladevorrichtung 11 (nicht dargestellt) aufweisen. Dieser Anschluss 13 kann aber auch an einem der anderen Batteriepacks angeordnet sein.

Das Batteriemanagementsystem 3 ist mit den jeweiligen Schaltern 9 und/oder Messeinrichtungen 8 sowohl im Hauptmodul 5 als auch in den Satellitenmodulen 6 jeweils elektrisch und/oder kommunikativ verbunden. Die Messeinrichtung 8 kann auch im Batteriemanagementsystem 3 des Hauptmoduls 5 angeordnet sein oder in diesem integriert sein. Das im Hauptmodul 5 angeordnete Batteriemanagementsystem 3 ist dazu eingerichtet, die Schalter sowohl im Hauptmodul 5 als auch in den Satellitenmodulen 6 direkt anzusteuern. Insbesondere kann eine Ansteuerung ohne Umweg über ein Slave-Steuergerät in den Satellitenmodulen 6 erreicht werden.

Gleichfalls ist das Batteriemanagementsystem 3 auch direkt mit den Messeinrichtungen 8 im Hauptmodul 5 und in den Satellitenmodulen 6 verbunden und kann mit den Messeinrichtungen 8 direkt und ohne weitere Umwege kommunizieren.

Die jeweiligen Schalter 9 sind dabei dazu eingerichtet, das jeweilige Batteriepack ein- und auszuschalten, also von der Schaltanordnung 4 zu trennen oder mit dieser elektrisch zu verbinden.

Die Messeinrichtungen 8 in den jeweiligen Batteriepacks sind dazu eingerichtet, einen Betriebsparameter, wie beispielsweise eine Spannung, Strom, Temperatur und/oder einen Ladezustand, der jeweiligen Batteriezelle 7 zu messen. Das Batteriemanagementsystem 3 kann somit in den Batteriepacks, insbesondere in den Satellitenmodulen 6, den Schalter 9 zum Ein- und Ausschalten des jeweiligen Batteriepacks direkt und ohne Umweg über ein Slave-Steuergerät ansteuern und/oder einen Betriebsparameter direkt messen.

Damit kann auf eigene Steuergeräte in den Satellitenmodulen 6 verzichtet werden, was aus Kostengründen, aus Gründen der Robustheit des Systems und aus Gründen der Wartung des Systems von Vorteil ist.

Beispielsweise kann auf ein erneutes Flashen von Slave-Steuergeräten bei Änderungen der Konfiguration oder für Updates in den Satellitenmodulen 6, welche aufgrund der räumlichen Verteilung häufig schwer zugänglich sind, vermieden werden, da das Batteriemanagementsystem 3 im Hauptmodul 5 die jeweiligen Schalter 9 und/oder der Messeinrichtung 8 in den Satellitenmodulen 6 und im Hauptmodul 5 direkt ansteuert.

Mit anderen Worten ist die Inbetriebnahme und die Wartung des hier beschriebenen Batteriesystems 1 deutlich vereinfacht gegenüber den herkömmlichen Batteriesystemen durch die beschriebene Aufteilung der Batteriepacks in ein Hauptmodul 5, in welchem das Batteriemanagementsystem 3 angeordnet ist, und die Satellitenmodule 6, welche jeweils kein eigenes Steuergerät aufweisen.

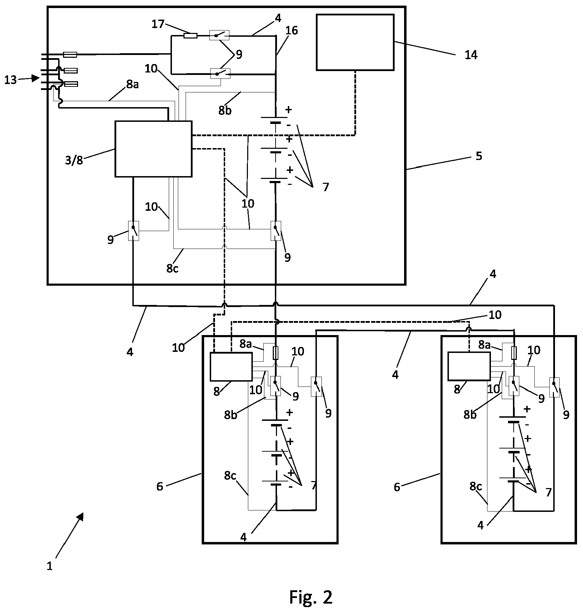

In Figur 2 ist schematisch das räumlich verteilte Batteriesystem 1 dargestellt. Das Batteriesystem 1 umfasst hier drei Batteriepacks, wobei genau eines der Batteriepacks, hier das Hauptmodul 5, das Batteriemanagementsystem 3 umfasst. Die Batteriepacks umfassen jeweils eine Vielzahl von Batteriezellen 7, welche beispielsweise in der Schaltanordnung 4 miteinander in Reihe oder parallel geschaltet sein können. Die Satellitenmodule 6 sind bezüglich der Anordnung der Batteriezellen 7 im Wesentlichen mit dem Hauptmodul 5 baugleich.

Die Satellitenmodule 6 weisen jedoch kein eigenes elektronisches Steuergerät, sondern nur die physischen Schalter 9 und/oder die Messeinrichtung 8 zum Messen eines Betriebsparameters der Batteriezellen 7 auf. Das Hauptmodul 5 kann ebenfalls zumindest einen Schalter 9 und/oder die Messeinrichtung 8 zum Messen des Betriebsparameters der Batteriezellen 7 umfassen. Die Messeinrichtung 8 kann beispielsweise als ein Halbleiterbauelement, insbesondere auf einem Printed Circuit Board, ausgestaltet sein.

Entsprechend weist nur das Hauptmodul 5 als einziges Batteriepack das Batteriemanagementsystem 3 auf, welches mit den Schaltern 9 und/oder den Messeinrichtungen 8 im Hauptmodul 5 und den Satellitenmodulen 6 mittels einer Signalleitung 10 direkt verbunden und dazu eingerichtet ist, diese direkt anzusteuern und/oder Betriebsparameter als Messwerte auszulesen. Das Batteriemanagementsystem 3 kann dabei als ein elektronisches Steuergerät ausgebildet sein.

Das Hauptmodul 5 weist weiterhin einen gemeinsamen elektrischen Anschluss 13 zum Anschließen an eine Ladevorrichtung 11 und/oder einen elektrischen Verbraucher 12 (nicht dargestellt) auf. Der Anschluss 13 kann beispielsweise eine Klemme oder ein Stecker sein und für einen Gleich-, Wechsel- oder einen Drehstrom ausgebildet sein. Das Batteriesystem 1 stellt somit eine einzige, mehrere Batteriepacks 5 und 6 umfassende Batterie dar, welche dazu eingerichtet ist, über den Anschluss 13 mit der Ladevorrichtung 11 und/oder dem elektrischen Verbraucher 12 verbunden zu werden.

Dem Anschluss 13 kann eine Voraufladeschaltung 16 vorgeschaltet sein, welche durch Öffnen oder Schließen des jeweiligen Schalters 9 dem Batteriesystem 1 einen Vorlaufadewiderstand 17 zur Begrenzung des Ladestroms vorschalten kann. Das Batteriemanagementsystem 3 kann hierzu den Schalter 9 in der Voraufladeschaltung 16 beim Einschalten der Batterie zum Bereitstellen einer Strombegrenzung ansteuern, um möglicherweise auf der Verbraucherseite liegende Kapazitäten oder Induktivitäten mit einem begrenzten Strom zu laden, bevor die Batterie vollständig freigeschaltet wird.

So kann im Hauptmodul 5 für das gesamte Batteriesystem 1 oder separat für das jeweilige Batteriepack 5 und 6 eine Voraufladeschaltung 16 vorgesehen sein, welche mittels eines Ansteuerns der Schalter 9 von dem Batteriemanagementsystem 3 aktiviert und/oder deaktiviert werden kann. Beispielsweise kann das Batteriemanagementsystem 3 von einem Batteriehauptsteuergerät 14 ein Signal über das Einschalten der Batterie empfangen. Darauf kann das Batteriemanagementsystem 3 dazu eingerichtet sein, über mittels eines Ansteuerns des Schalters 9 den Vorladewiderstand 17 den jeweiligen Batteriepacks 5 und 6 für das Bereitstellen einer Strombegrenzung vorzuschalten.

Ergänzend oder alternativ kann die Voraufladeschaltung 16 für das jeweiligen Hauptmodul 5 und das Satellitenmodul 6 jeweils separat, insbesondere zum Bereitstellen einer Strombegrenzung beim Symmetrieren bei einer hohen Abweichung eines Betriebsparameters in den jeweiligen Batteriepacks 5 und 6 vorgesehen sein.

Das Batteriemanagementsystem 3 ist mittels der Signalleitung 10 mit dem jeweiligen Schalter 9 und/oder der Messeinrichtung 8 sowohl im Hauptmodul 5 als auch ergänzend im Satellitenmodul 6 elektrisch und/oder kommunikativ verbunden. Beispielsweise kann das Batteriemanagementsystem 3 mittels eines elektrischen Signals über die Signalleitung 10 den jeweiligen Schalter 9 öffnen oder schließen, um einen Schaltzustand des Hauptmoduls 5 und/oder des Satellitenmoduls 6 bezüglich der Schaltanordnung 4 zu ändern.

Beispielsweise können das Hauptmodul 5 und das Satellitenmodul 6 von der Schaltanordnung 4 jeweils einzeln getrennt oder mit der Schaltanordnung 4 elektrisch verbunden werden. Weiterhin kann das Batteriemanagementsystem 3 mit einem Batteriehauptsteuergerät 14 und/oder einem anderen externen Steuergerät mittels der Signalleitung 10 kommunikativ verbunden sein, sodass das Batteriemanagementsystem 3 dazu eingerichtet ist, Signale umfassend den Betriebszustand der Batteriezellen 7 an das Batteriehauptsteuergerät 14 zu senden und/oder Signale vom Batteriehauptsteuergerät 14 zu empfangen, wie beispielsweise ein Signal für das Starten eines Ladevorgangs. Die Messeinrichtung 8 kann beispielsweise ein Messgerät, insbesondere eine Spannungsmesskarte sein.

Ergänzend oder alternativ kann die Messeinrichtung 8 dazu eingerichtet sein, eine Temperatur, einen Strom und/oder einen Ladezustand der jeweiligen Batteriezelle 7 zu messen, wobei die Messeinrichtung 8 dazu eingerichtet sein kann, den Betriebsparameter für die jeweilige Batteriezelle 7 jeweils einzeln für die jeweilige Batteriezelle 7 zu messen. Beispielsweise kann, wie in Figur 1 dargestellt, die Messeinrichtung 8 in den Batteriepacks 5 und 6 dazu eingerichtet sein, einen Spannungswert bei einem Klemmeneingang 8a sowie vor 8b und nach 8c dem Bündel an Batteriezellen 7 zu messen und den Messwert 8 über die Signalleitung 10 direkt und insbesondere ohne Umweg über ein Slave-Steuergerät an das Batteriemanagementsystem 3 zu übermitteln. Die Signalleitung 10 dient somit als eine verlängerte Leitung zu der Messeinrichtung 8. Die Signalleitung 10 kann beispielsweise eine elektrische oder eine optische Signalleitung 10 sein.

Ebenfalls ist das Batteriemanagementsystem 3 mittels der Signalleitung 10 direkt mit den jeweiligen Schaltern 9 in den Batteriepacks 5 und 6 verbunden und kann dazu eingerichtet sein, diese jeweils direkt anzusteuern. Die Signalleitung 10 kann dazu beispielsweise ein elektrisches Signal zum Öffnen oder Schließen direkt und insbesondere ohne Umweg über ein Slave-Steuergerät an den jeweiligen Schalter 9 übertragen. So kann das Batteriemanagementsystem 3 dazu eingerichtet sein, mittels eines Ansteuerns der Schalter 9 das jeweilige Satellitenmodul 6 ein- oder auszuschalten, insbesondere das jeweilige Batteriepack 5 und 6 von der Schaltanordnung 4 zu trennen oder mit dieser zu verbinden.

Ergänzend oder alternativ können das Batteriemanagementsystem 3 und die Schaltanordnung 4 dazu eingerichtet sein, mittels eines Öffnens oder Schließens des Schalters 9 in den jeweiligen Batteriepacks 5 und 6 die Schaltanordnung 4 der Batteriepacks 5 und 6 von einer Reihenschaltung in eine Parallelschaltung umzuschalten.

Weiterhin können das Batteriemanagementsystem 3 und die Schaltanordnung 4 dazu eingerichtet sein, mittels eines Ansteuerns der Schalter 9 die jeweiligen Batteriepacks 5 und 6 über die Schaltanordnung 4 zu symmetrieren, sodass beispielsweise alle Batteriepacks 5 und 6 und insbesondere die Batteriezellen 7 einen gleichen Betriebsparameterwert, wie beispielsweise eine gleiche Spannung und/oder einen gleichen Ladezustand, aufweisen.

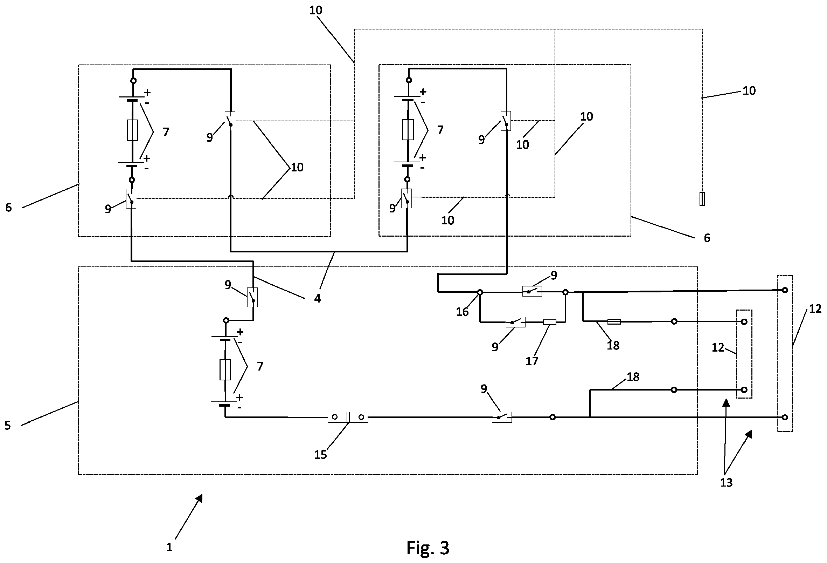

In Figur 3 ist ein ergänzendes, schematisches Schaltbild des Batteriesystems 1 dargestellt, welches über den Anschluss 13 des Hauptmoduls 5 an eine Ladevorrichtung 11 oder einen elektrischen Verbraucher 12 angeschlossen ist. Der elektrische Verbraucher 12 kann beispielsweise ein Elektromotor des Kraftfahrzeugs 2 sein. Ergänzend kann ein weiterer elektrischer Verbraucher, über eine Abzweigung 18 an das Batteriesystem 1 angeschlossen sein. Hier sind Vorrichtungen zur Stromwandlung nicht dargestellt.

Das Hauptmodul 5 umfasst die Schalter 9 und die Voraufladeschaltung 16, welche über die Schaltanordnung 4 mit einem Bündel von Batteriezellen 7 elektrisch verbunden sind. Zusätzlich umfasst das Hauptmodul 5 eine elektrische Sicherung 15 mit einem Erdkontakt. Das Hauptmodul 5 dient somit als Schnittstelle für das Batteriesystem 1, sodass aus Sicht von außen, also beispielsweise aus Sicht des elektrischen Verbrauchers 12, das Batteriesystem 1 als eine einzige Batterie fungiert.

Ergänzend können dem Hauptmodul 5 Satellitenmodule 6 nachgeschaltet sein, welche keine eigenen Steuergeräte aufweisen. Die Satellitenmodule 6 umfassen jeweils ein Bündel von Batteriezellen 7 zur Steigerung der Batteriekapazität und können vom Hauptmodul 5 aus räumlich verteilt im Kraftfahrzeug 2 angeordnet sein. Die Satellitenmodule 6 umfassen die Schalter 9, welche das jeweilige Satellitenmodul 6 ein- oder ausschalten können, insbesondere das Satellitenmodul 6 vom Batteriesystem 1 trennen und/oder dazuschalten können. Hierzu sind die Schalter 9 mit einer Signalleitung 10 verbunden, die dazu eingerichtet ist, direkt mit dem Batteriemanagementsystem 3 des Batteriesystems 1 für eine direkte Ansteuerung durch das Batteriemanagementsystem 3 verbunden zu werden. Das Batteriemanagementsystem 3 ist vom Satellitenmodul 6 räumlich getrennt und beispielsweise im Hauptmodul 5 angeordnet.

Hierbei weisen die Satellitenmodule 6 keine eigenen Steuergeräte, sondern nur eine Aktorik auf, welche jeweils über die Signalleitung 10 direkt vom Batteriemanagementsystem 3 ohne Umweg über ein Slave-Steuergerät angesteuert werden. Hierdurch kann insbesondere in einem Entwicklungsprozess ein Flashen von Steuergeräten in Batteriepacks eines räumlich verteilten Batteriesystems 1, welche an räumlich schwer zugänglich sind, vermieden werden. Hierzu ist nämlich häufig ein Ausbauen der betroffenen Steuergeräte notwendig. Durch die beschriebene Anordnung, also durch eine direkte Verbindung des Batteriemanagementsystems 3 mit der Aktorik 9 und/oder der Sensorik 8 in den Batteriepacks mittels einer Signalleitung 10, kann dieses Problem vermieden werden.

Insgesamt zeigt das Beispiel, wie ein Multipack-Batteriesystem von einem einzelnen elektronischen Steuergerät, insbesondere einer ECU, gesteuert werden kann.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Batteriesystem
- 2: Kraftfahrzeug
- 3: Batteriemanagementsystem
- 4: Schaltanordnung
- 5: Hauptmodul
- 6: Satellitenmodul
- 7: Batteriezelle
- 8: Messeinrichtung
- 8a: Klemmeneingang
- 8b: Klemmeneingang
- 8c: Klemmeneingang
- 9: Schaltelement
- 10: Signalleitung
- 12: elektrischer Verbraucher
- 13: Anschluss
- 14: Batteriehauptsteuergerät
- 15: Sicherung
- 16: Voraufladeschaltung
- 17: Vorladewiderstand
- 18: Abzweigung

## Patentansprüche

1. Batteriesystem (1), bevorzugt für ein Kraftfahrzeug (2), umfassend ein Batteriemanagementsystem (3) und mindestens zwei Batteriepacks (5, 6), die jeweils Batteriezellen (7), mindestens einen Schalter (9) zum Schalten des jeweiligen Batteriepacks (5, 6) und eine Messeinrichtung (8) zum Messen von Betriebsparametern der Batteriezellen (7) aufweisen,
**dadurch gekennzeichnet, dass**
das Batteriemanagementsystem (3) in genau einem der Batteriepacks (5) angeordnet ist und die Schalter (9) der übrigen Batteriepacks (6) von dem Batteriemanagementsystem (3) angesteuert werden.

2. Batteriesystem (1) nach Anspruch 1, wobei das Batteriemanagementsystem (3) dazu eingerichtet ist, mittels der Messeinrichtungen (8) Betriebsparameter der Batteriezellen (7) direkt zu messen.

3. Batteriesystem (1) nach einem der vorhergehenden Ansprüche, wobei das Batteriemanagementsystem (3) mit den Messeinrichtungen (8) und/oder den Schaltern (9) mittels einer Signalleitung (10) zum Senden und/oder zum Empfangen von einem Signal direkt verbunden ist.

4. Batteriesystem (1) nach einem der vorhergehenden Ansprüche, wobei die jeweiligen Batteriepacks (5, 6) räumlich getrennt, bevorzugt räumlich verteilt sind.

5. Batteriesystem (1) nach einem der vorhergehenden Ansprüche, wobei das Batteriemanagementsystem (3) dazu eingerichtet ist, einen Betriebszustand der Batteriezellen (7), bevorzugt den Betriebszustand des Batteriesystems (1), auszuwerten.

6. Batteriesystem (1) nach einem der vorhergehenden Ansprüche, wobei das Batteriemanagementsystem (3) dazu eingerichtet ist, mittels dem jeweiligen Schalter (9) einen Schaltzustand des jeweiligen Batteriepacks (5, 6) bezüglich einer Schaltanordnung (4) zu ändern, insbesondere das jeweilige Batteriepack (5, 6) mit der Schaltanordnung (4) elektrisch zu verbinden oder von der Schaltanordnung (4) zu trennen.

7. Batteriesystem (1) nach einem der vorhergehenden Ansprüche, wobei das Batteriemanagementsystem (3) dazu eingerichtet ist, mittels einer Ansteuerung des Schalters (9) das Batteriesystem (1) über die Schaltanordnung (4) zu symmetrieren.

8. Batteriesystem (1) nach einem der vorhergehenden Ansprüche, wobei ein gemeinsamer elektrischer Anschluss (13), bevorzugt eine Klemme oder einen Stecker, zum Anschließen aller Batteriepacks (5, 6) an eine Ladevorrichtung (11) und/oder einen elektrischen Verbraucher (12) vorgesehen ist.

9. Batteriesystem (1) nach einem der vorhergehenden Ansprüche, wobei das Batteriemanagementsystem (3) dazu eingerichtet ist, mittels dem Schalter (9) dem Batteriesystem (1), insbesondere dem jeweiligen Batteriepack (5, 6), eine Voraufladeschaltung (16) vorzuschalten.

10. Kraftfahrzeug (2) umfassend ein Batteriesystem (1), insbesondere ein räumlich verteiltes Batteriesystem (1), nach einem der Ansprüche 1 bis 9.
